# EUROPEAN PATENT APPLICATION

(11) **EP 3 038 394 A1**
(43) Date of publication of application: **29.06.2016**
(21) Application number: 14307135.5
(22) Date of filing: 22.12.2014
(51) Int. Cl.: H04W 12/08, H04W 8/18, H04W 4/00

(54) **Method of restoring a secure element to a factory state**

(71) Applicant: GEMALTO SA, 92190 Meudon (FR)
(72) Inventor: Boulanger, Nicolas, 13881 GEMENOS Cedex (FR); Silvestre, Thierry, 13881 GEMENOS Cedex (FR); Roche, Olivier, 13881 GEMENOS Cedex (FR); Thengtrirat, Pannawit, 13881 GEMENOS Cedex (FR); Charbonnier, Sylvain, 13881 GEMENOS Cedex (FR)

(57) **Abstract**

The invention is a method for restoring to a factory state a secure element which is embedded in a first device and which comprises a set of data. The method comprises the steps of:
- classifying data of the set in three independent categories,
- retrieving from a second device a first entity configured to provide factory value of data of the first category,
- restoring all current data of the first category (C1) by factory value,
- retrieving from a third device a second entity configured to provide factory value of data of the second category,
- restoring factory value of data of the second category.

## Description

### (Field of the invention)

The present invention relates to methods of restoring a secure element to its factory state. It relates particularly to methods of restoring to factory state secure elements deployed on the field.

### (Background of the invention)

A secure element is either a tamper-resistant physical component able to store data and to provide services in a secure manner or a software component emulating a component and providing a trusted storage area and trusted services. A secure element has an operating system configured to deny access to its resources to an entity which is not entitled. In general, a secure element has a limited amount of memory, a processor with limited capabilities and is devoid of battery. For instance a UICC (Universal Integrated Circuit Card) is a secure element which embeds SIM applications for telecommunication purposes. A secure element can be installed, fixedly or not, in a terminal, like a mobile phone for example. In some cases, the terminals are constituted by machines that communicate with other machines for M2M (Machine to Machine) applications.

A secure element can be in the format of a smart card, or may be in any other format such as for example but not limited to a packaged chip as described in PCT/SE2008/050380, or any other format.

It is known to solder or weld the secure element in a host device, in order to get it dependent of this host device. This is done in M2M (Machine to Machine) applications. The same objective is reached when a chip (a secure element) containing an application is contained in the host device. The chip is for example soldered to the mother-board of the host device or machine and constitutes an embedded-secure element (eSE).

A removable secure element uniquely associated with its hosting device may also be considered as an embedded-secure element.

According to the usual process, a secure element is personalized at factory stage. Then the secure element is deployed on the field and delivered to a final user. In most cases, the secure element is customized with data specific to the final user, like password, PIN, or credentials after the factory stage. These specific data may be sensitive.

When a device hosting a secure element is sold or given to another user, there is a need to restore the secure element to its factory state.

### (Summary of the Invention)

An object of the invention is to solve the above mentioned technical problem.

The object of the present invention is a method for restoring to a factory state a secure element embedded in a first device. The secure element comprises a set of data. The method comprises the steps:
- classifying data of the set in three categories independent from each other,
- retrieving from a second device a first entity configured to provide factory value of data of the first category, removing all current data of the first category from the secure element and restoring factory value of data of the first category,
- retrieving from a third device a second entity configured to provide factory value of data of the second category, removing all current data of the second category from the secure element and restoring factory value of data of the second category, the data of the third category being kept unchanged in the secure element.

Advantageously, the data of the first category may be variable and unique to a set of secure elements including said secure element and the data of the second category may be variable and unique to said secure element.

Advantageously, the first category may contain applicative data and parameters, the second category may contain secret data, the secure element may comprise an operating system and the third category may contain the executable code of said operating system.

Advantageously, the first device and third device may be merged in a single device.

Another object of the invention is a secure element embedded in a first device and comprising a set of data. The secure element comprises a restoring agent configured to retrieve from a second device a first entity adapted to provide factory value of data of a first category of data of the set, to remove all current data of the first category and to restore factory value of data of the first category in the secure element. The restoring agent is configured to retrieve from a third device a second entity adapted to provide factory value of data of the second category of data of the set, to remove all current data of the second category and to restore factory value of data of the second category in the secure element.

Advantageously, the data of the first category may be variable and unique to a set of secure elements including said secure element and the data of the second category may be variable and unique to said secure element.

Advantageously, the first category may contain applicative data and parameters, the second category may contain secret data, the secure element may comprise an operating system and the third category may contain the executable code of the operating system.

Another object of the invention is system comprising a batch of secure elements according to the invention and the second device. The second device stores a series of indicators uniquely associated with each secure element of said batch. These indicators reflect the number of times the associated secure element has been restored in factory state.

### (Brief description of the drawings)

Other characteristics and advantages of the present invention will emerge more clearly from a reading of the following description of a number of preferred embodiments of the invention with reference to the corresponding accompanying drawings in which:
- Figure 1 is an example of a set of data classified in three categories according to the invention, and
- Figure 2 is an example of a system comprising a device hosting a secure element and two other devices according to the invention,

### (Detailed description of the preferred embodiments)

The invention may apply to any types of secure element intended to record sensitive data after its issuance step. The secure element may be coupled to any type of host machine able to establish a communication session with the secure element. For example the host machine may be a mobile phone, a tablet PC, an electronic pair of glasses, an electronic watch, an electronic bracelet, a vehicle, a meter, a slot machine, a TV or a computer.

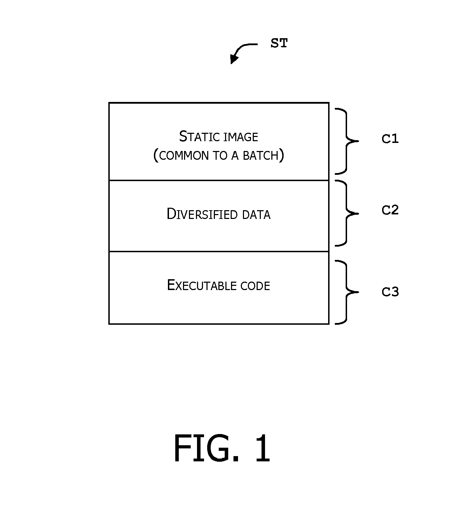

**Figure 1** shows a set ST of data stored in a secure element SE according to the invention.

The set ST of data is divided in three parts also named categories: C1, C2 and C3.

A data cannot belong to several categories. In other words, the three categories are independent from each other.

The category C1 corresponds to a so-called static image which encompasses data common to a batch of secure elements. For instance, data of the category C1 may be a group of files containing applicative data shared by all secure elements belonging to the batch.

The value of data of the category C1 may be variable from a batch to another one. The value of data of the category C1 apply to all secure elements belonging to a batch.

The data of the category C1 may be applicative data (i.e. files, counters or registers managed by application), application identifier or parameters for example.

The category C2 corresponds to a so-called diversified data which encompasses data specific to the secure element SE. For instance, data of the category C2 may be a key set and a serial number uniquely allocated to the secure element SE.

The value of data of the category C2 are almost always variable from a secure element to another one.

The data of the category C2 may be secret keys, private keys, specific identifier, subscription, access rights, service credentials, sensitive applications, user account number or passwords for example.

The category C2 may also contain random values, seeds or any data used as input parameters for generating the correct value of other element of the category C2.

Data of the categories C1 and C2 may be stored in any combination of any kind of containers. For instance, the data may be stored in file trees, in registers, in secure domains or in a database.

The category C3 may correspond to an executable code which is run by the secure element SE. For instance, data of the category C3 may contain the operating system of the secure element SE. In another example, the data of the category C3 can contain the type, the identifier or the manufacturer reference of the associated host device HO. In another example, they can contain parameters reflecting capabilities of the associated host device HO. Generally, data of the category C3 remain unchanged over the life cycle of the secure element SE.

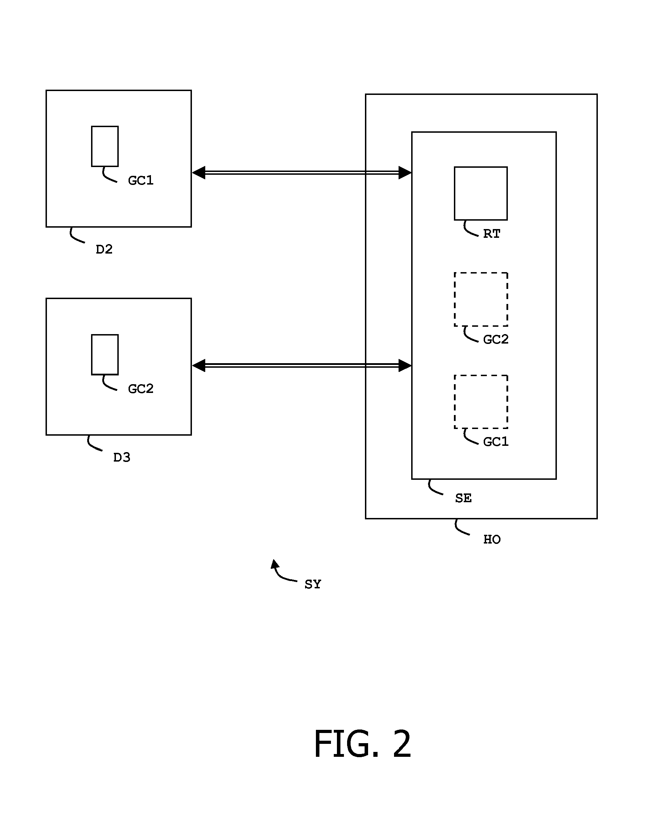

**Figure 2** shows a system SY comprising the devices D2 and D3 and a host device HO embedding a secure element SE according to the invention.

In this example, the host device HO is a customary mobile phone having a hardware communication interfaces for communicating with the secure element SE.

The secure element SE is an embedded UICC which comprises a working memory of RAM type, a processing means and a non volatile memory. The secure element SE comprises (not drawn) the set ST of data of the Figure 1. The secure element SE also comprises a restoring agent RT which is configured to retrieve from the device D2 an entity GC1 which is configured to provide factory value of data of the category C1. The restoring agent RT is also configured to retrieve from the device D3 an entity GC2 which is configured to provide factory value of data of the category C2.

The restoring agent RT is configured to remove all current data of the categories C1 and C2 from the secure element SE and to restore factory value of data of the categories C1 and C2 in the secure element SE.

Advantageously, the restoring agent RT may manage the removal of the current data and the restoration of the new value in an atomic way so that either the whole secure element is restored to its factory state or remains unchanged. Such an embodiment is well adapted when the size of data to restore is low compared to the memory size of the secure element.

In another embodiment, in case of error during the process of restoration, the restoring agent RT may be configured to restart the restoration from the beginning or to resume the restoration from an intermediate restoration point. In this case, the restoring agent RT stores data reflecting intermediate milestones of the restoration process.

The entity GC1 may be a set of the factory values or a software application able to generate the relevant values.

The entity GC2 may be a set of the factory values or a software application able to generate the relevant values. Advantageously, the entity GC2 may be a script configured to generate the relevant values diversified for the targeted secure element SE. The script is run in the secure element so that the confidentiality of the generated diversified values is kept.

In one embodiment, the device D3 is a remote server adapted to communicate with the secure element SE through the host device HO. For instance, the device D3 may reach the secure element SE via an OTA (Over-The-Air) channel.

In another embodiment, the device D3 and the host device HO may be merged in a single device. This can be implemented when the size of the entity GC2 is compliant with the size of the available non volatile memory of the device HO.

The device D2 may be a distant server able to communicate with the secure element SE through the host device HO. Advantageously, the device D2 may manage and store a series of indicators which are uniquely associated with each secure element of a batch of secure elements. The device D2 may be configured to update these indicators so that to reflect the number of times the associated secure element has been restored to its factory state. In this case, the restoring agent RT is configured to send a message to the device D2 so as to indicate the full achievement of the restoration for the secure element SE.

Advantageously, the device D2 may refuse the restoration to factory state for the secure element SE if preset conditions are met. In such a case, the device D2 does not provide the restoring agent RT with the entity GC1. The preset conditions may be based on a maximum threshold for the number of restorations or the receipt of an agreement for restoration coming by another channel from the registered user.

Advantageously, the restoring agent RT may be automatically triggered as soon as the host device HO is restored in factory state or as soon as the value of a specific field is changed in the host device HO.

Advantageously, the secure element SE may be configured to authenticate the devices D2 and D3. Conversely, the devices D2 and D3 may be configured to authenticate the secure element SE so that the entities GC1 and GC2 are sent to a genuine secure element.

Thanks to the invention the secure element may be restored to its factory state when needed. In particular, the invention may be used when a secure element is given to a new owner or when the ownership of the device hosting the secure element changes. The invention may also be used when the hosting device is sent to after-sales service if it needs repair or maintenance.

It must be understood, within the scope of the invention that the above-described embodiments are provided as non-limitative examples. In particular, the secure element may comprise any number of sensitive data.

The architecture of the system shown at Figure 2 is provided as example only.

## Claims

1. A **method** for restoring to a factory state a secure element (SE) embedded in a first device (HO), said secure element (SE) comprising a set (ST) of data,
**characterized in that** said method comprises the steps:
- classifying data of the set (ST) in three categories (C1, C2, C3) independent from each other,
- retrieving from a second device (D2) a first entity (GC1) configured to provide factory value of data of the first category (C1), removing all current data of the first category (C1) from the secure element (SE) and restoring factory value of data of the first category (C1),
- retrieving from a third device (D3) a second entity (GC2) configured to provide factory value of data of the second category (C2), removing all current data of the second category (C2) from the secure element (SE) and restoring factory value of data of the second category (C2), the data of the third category (C3) being kept unchanged in the secure element (SE).

2. A method according to claim 1, wherein the data of the first category (C1) is variable and unique to a set of secure elements including said secure element (SE) and wherein the data of the second category (C2) is variable and unique to said secure element (SE).

3. A method according to claim 1, wherein the first category (C1) contains applicative data and parameters, wherein the second category (C2) contains secret data, wherein the secure element (SE) comprises an operating system and wherein the third category (C3) contains the executable code of said operating system.

4. A method according to claim 1, wherein said first device (HO) and third device (D3) are merged.

5. A **secure element** (SE) embedded in a first device (HO) and comprising a set (ST) of data,
**characterized in that** said secure element (SE) comprises a restoring agent (RT) configured to retrieve from a second device (D2) a first entity (GC1) adapted to provide factory value of data of a first category (C1) of data of the set (ST), to remove all current data of the first category (C1) and to restore factory value of data of the first category (C1) in the secure element (SE) and **in that** said restoring agent (RT) is configured to retrieve from a third device (D3) a second entity (GC2) adapted to provide factory value of data of the second category (C2) of data of the set, to remove all current data of the second category (C2) and to restore factory value of data of the second category (C2) in the secure element (SE).

6. A secure element (SE) according to claim 5, wherein the data of the first category (C1) is variable and unique to a set of secure elements including said secure element (SE) and wherein the data of the second category (C2) is variable and unique to said secure element (SE).

7. A secure element (SE) according to claim 5, wherein the first category (C1) contains applicative data and parameters, wherein the second category (C2) contains secret data, wherein the secure element (SE) comprises an operating system and wherein the third category (C3) contains the executable code of said operating system.

8. A **system** (SY) comprising a batch of secure elements according to claim 5 and the second device (D2), wherein the second device (D2) stores a series of indicators uniquely associated with each secure element of said batch, said indicators reflecting the number of times the associated secure element has been restored in factory state.
